# EUROPÄISCHE PATENTANMELDUNG

(11) **EP 4 621 287 A1**
(43) Veröffentlichungstag der Anmeldung: **24.09.2025**
(21) Anmeldenummer: 24164137.2
(22) Anmeldetag: 18.03.2024
(51) Int. Cl.: F21V 8/00, F21S 43/235, F21S 43/245, F21S 43/20, F21S 43/237, F21S 43/27, B60Q 3/64

(54) **HALTEVORRICHTUNG FÜR EINEN LICHTLEITKÖRPER, MONTAGEVERFAHREN ZUM BEFESTIGEN EINES LICHTLEITERS IN EINER HALTEVORRICHTUNG SOWIE MONTAGEVORRICHTUNG**

(71) Anmelder: ZKW Group GmbH, 3250 Wieselburg (AT)
(72) Erfinder: Etlinger, Stefan, 3100 St. Pölten (AT); Pritzl, Leopold, 3254 Bergland (AT); Bandion, Christian, 3386 Hafnerbach (AT); Prager, Christian, 3340 Waidhofen an der Ybbs (AT); Steiner, Eva, 3325 Ferschnitz (AT)
(74) Vertreter: Patentanwaltskanzlei Matschnig & Forsthuber OG

(57) **Zusammenfassung**

Die Erfindung betrifft eine Haltevorrichtung (1) für einen langestreckten Lichtleitkörpers (2), umfassend einen Haltekörper (10), der eine Lichtleiteraufnahme (11) für den Lichtleitkörper (2) aufweist, wobei der Haltekörper aus zwei Haltekörperteilen gebildet ist, wobei der erste Haltekörperteil (20) aus einem ersten Kunststoff als Weichkomponente und der zweite Haltekörperteil (21) aus einem zweiten Kunststoff als Hartkomponente ausgebildet ist. Die Haltekörperteile (20, 21) sind fest miteinander verbunden. Der erste Haltekörperteil (20) weist die Lichtleiteraufnahme (11) auf, die als längliche Vertiefung ausgebildet ist, wobei der erste Haltekörperteil (20) zwei Umfassungsabschnitte (20d, 20e) aufweist, welche die Vertiefung an gegenüberliegende Seiten begrenzen, und wobei die Lichtleiteraufnahme (11) eine Öffnung (11') aufweist, welche an einer von dem zweiten Haltekörperteil (21) abgewandten Seite (20') des ersten Haltekörperteils (20) ausgebildet ist und von den beiden Umfassungsabschnitten (20d, 20e) begrenzt ist. In einer Grundform des Haltekörpers (10) weist die Öffnung (11') eine Weite (w) aufweist. Der zweite Haltekörperteil (21) ist derart ausgebildet, dass dieser durch externe Krafteinwirkung elastisch verformbar ist und er ist derart mit dem ersten Haltekörperteil (20) verbunden, dass durch eine elastische Verformung des zweiten Haltekörperteils (21) die Weite (w) der Öffnung (11') in Bezug auf die Grundform des Haltekörpers (10), in welcher keine äußere Kraft wirkt, derart durch Auseinanderspreizen der beiden Umfassungsabschnitte (20d, 20e) des ersten Haltekörperteils (20) vergrößert wird, dass der Lichtleitkörper (2) in die Lichtleiteraufnahme (11) eingesetzt werden kann. Nach Wegfall der äußeren Kraft kehrt der Haltekörper (10) im Wesentlichen in seine Grundform zurück, sodass die Umfassungsabschnitten (20d, 20e) den in die Vertiefung eingesetzten Lichtleiter (2) umgreifen und dieser von den Umfassungsabschnitten (20d, 20e) geklemmt wird.

## Beschreibung

Die Erfindung betrifft eine Haltevorrichtung für einen, insbesondere langestreckten, Lichtleitkörpers, beispielsweise in Form einer, z.B. flexiblen, Lichtleitfaser, wobei die Haltevorrichtung einen Haltekörper umfasst, wobei der Haltekörper eine Lichtleiteraufnahme für den Lichtleitkörper aufweist, wobei der Haltekörper aus zwei Haltekörperteilen, einem ersten Haltekörperteil und einem zweiten Haltekörperteil, gebildet ist, wobei der erste Haltekörperteil, der sogenannte innere Haltekörperteil, aus einem ersten Kunststoff als Weichkomponente ausgebildet ist, wobei vorzugsweise die beiden Haltekörperteile aus unterschiedlichen Kunststoffen gebildet sind, und vorzugsweise der zweite Haltekörperteil aus einem zweiten Kunststoff als Hartkomponente ausgebildet ist, und wobei der erste Haltekörperteil und der zweite Haltekörperteil, der sogenannte äußere Haltekörperteil, fest miteinander verbunden sind und den Haltekörper bilden.

Weiters betrifft die Erfindung ein Montageverfahren zur Befestigung von zumindest einem Lichtleitkörper an einer solchen Haltevorrichtung.

Außerdem betrifft die Erfindung eine Montageeinrichtung zum Durchführen des Montageverfahren zur Befestigung zumindest eines Lichtleitkörpers an der Haltevorrichtung.

Schließlich betrifft die Erfindung noch eine Fahrzeugleuchte und ein Fahrzeug mit zumindest einer solchen Fahrzeugleuchte.

Längliche Leitleitkörper, wie z.B. Lichtfasern/Lichtleitfasern besitzen eine Längserstreckung und können dazu eingerichtet sein, in die Lichtleitfaser eingekoppeltes Licht zumindest abschnittsweise seitlich, also senkrecht zur Längserstreckung der Lichtleitfaser, auszukoppeln. Zu diesem Zweck können derartige Lichtleitfasern Streupartikel und/oder Streustrukturen enthalten.

Lichtleitfasern kommen beispielsweise in Kfz-Scheinwerfern und Kfz-Beleuchtungsvorrichtungen in verschiedensten Anwendungen zum Einsatz, beispielsweise in Tagfahrlicht- und Positionslampen, in Blinkern, zur Erzeugung von Lichtverteilungen, beispielsweise auch in adaptiven Scheinwerfern, oder als Design-Elemente, indem Lichtleitfasern in verschiedenen Formen und Mustern gestaltet und angeordnet werden, um ästhetische Designelemente im Scheinwerfer bzw. in der Beleuchtungsvorrichtung zu erzeugen. Dies ermöglicht den Fahrzeugherstellern, individuelle und auffällige Scheinwerferdesigns zu kreieren, die zur Identität des Fahrzeugs beitragen und der Individualisierung eines Fahrzeuglenkers dienen.

Solche Beleuchtungsvorrichtungen verfügen häufig über zumindest eine Lichtquelle, mit welcher beispielsweise eine oder mehrere Lichtverteilungen (Abblendlicht, Fernlicht, usw.) oder Signallicht-Funktionen (z.B. Abbiegelicht, ...) erzeugt werden können. Bei der zumindest einen Lichtquelle kann es sich z.B. um eine oder mehrere LED's handeln, aber auch um eine komplexere Anordnung aus Licht emittierenden Elemente, wie LED's, die im Zusammenspiel mit Lichtformungsmitteln (z.B. Reflektoren, Projektionslinsen, Lichtleitkörpern, usw.) die gewünschte(n) Lichtverteilung(en) oder Lichtfunktion(en) erzeugen.

Für die Lichtleitfaser bzw. die Lichtleitfasern ist bzw. sind in der Regel ein oder mehrere eigene Zusatzlichtquellen vorgesehen, mit welcher bzw. welchen Licht an einem Ende oder an den Enden der Lichtleitfaser(n) in diese eingespeist und wird und sich in dieser bzw. diesen in Längsrichtung der Lichtleitfaser(n) fortpflanzt und aus dieser bzw. diesen, beispielsweise durch Lichtstreuung an der Mantelfläche der Lichtleitfaser und/oder an Streustrukturen, austritt, sodass die Lichtleitfaser leuchtet.

Bei typischen Anwendungen sind die Lichtleitfasern an einem Halter, welcher in einem Gehäuse, etwa dem Gehäuse eines Kfz-Frontscheinwerfers- oder einer Kfz-Rückleuchte, oder in einem Gehäuse einer Beleuchtungsvorrichtung, die an einem Fahrzeugseitenbereich montiert ist, angebracht. Es können aber auch Beleuchtungsvorrichtungen für den Fahrzeuginnenraum einen solchen Aufbau aufweisen.

Das Gehäuse einer solchen Beleuchtungsvorrichtung, in welchem typischer Weise die eine oder die mehrere Lichtquellen angeordnet sind, wird von einer lichtdurchlässigen, transparenten Scheibe, die im Zusammenhang mit Beleuchtungsvorrichtungen für ein Kraftfahrzeug häufig als Abschlussscheibe oder Abdeckscheibe bezeichnet wird, abgedeckt oder verschlossen. Die Scheibe ist dabei zumindest in einem Teil des Wellenlängenbereiches des von der zumindest einen Lichtquelle emittierten Lichtes transparent, typischer Weise liegt dieser Wellenlängenbereich im sichtbaren und/oder IR-Wellenlängenbereich.

Häufig ist es dabei wünschenswert, die Lichtleitfaser möglichst nahe zu der transparenten Scheibe zu positionieren, um einen optimalen Beleuchtungseffekt zu erzielen, was insbesondere im Zusammenhang mit der Verwendung der Lichtleitfaser als Designelement von Vorteil ist. Beispielsweise ist zur optimalen Erzielung sogenannter "linearer" Beleuchtungseffekte bzw. eine linearer Beleuchtungserscheinungen, bei welche sich Leuchtmuster ergeben, die in eine Richtung eine große Ausdehnung und in der Querrichtung dazu eine geringe Ausdehnung aufweisen; es entstehen schmale, strichförmige Lichteindrücke, die z.B. als Kontur- oder Designlinien wirken, eine solche Positionierung von Vorteil.

Die Verwendung von Lichtleitfasern, etwa im Zusammenhang mit einer transparenten Scheibe, ist allerdings nicht nur im Kraftfahrzeug-Beleuchtungsbereich interessant, vielmehr kann die Verwendung von Lichtleitfasern auch im Zusammenhang mit allgemeinen Beleuchtungsvorrichtungen, z.B. Beleuchtungsvorrichtungen für die Beleuchtung von Wohn- oder Arbeitsräumen, Straßenbeleuchtungen, usw., bei welchen über eine lichtdurchlässige, transparente Scheibe vorgesehen ist, welche beispielsweise ein Gehäuse der Beleuchtungsvorrichtung abschließt, von Interesse sein.

Auch bei solchen Anwendungen ist typischer Weise zumindest eine Lichtquelle zur Realisierung einer Grundfunktion der Beleuchtungsvorrichtung vorgesehen, die zumindest eine Lichtleitfaser dient - unter Verwendung von zumindest einer Zusatzlichtquelle - zur Realisierung einer Zusatzlichtfunktion, beispielsweise zur Realisierung eines Designlichtes.

Längliche Lichtleitkörper, wie beispielsweise Lichtleitfasern, sind vielfältig anwendbar. Häufig sind diese auch flexibel und können dann an verschiedenste Formen angepasst werden. Allerdings macht dies die Montage langwierig und kompliziert und es kann sich in nachteiliger Weise ein welliges Erscheinungsbild ergeben.

Es ist eine Aufgabe der Erfindung, eine Lösung dafür anzugeben, wie eine Lichtleitfaser bzw. Lichtleitfasern auf einfache und kostengünstige Art und Weise stabil in einer definierten Position, beispielsweise möglichst nahe an einer transparenten Scheibe, etwa einer Abdeckscheibe, positioniert werden kann bzw. können.

Diese Aufgabe wird mit einer eingangs erwähnten Haltevorrichtung dadurch gelöst, dass erfindungsgemäß der erste Haltekörperteil die Lichtleiteraufnahme aufweist, wobei die Lichtleiteraufnahme als längliche Vertiefung, die sich entlang einer Kurve, beispielsweise einer Geraden, insbesondere entlang einer definierten Länge, vorzugsweise über eine gesamte Längserstreckung einer des Haltekörpers erstreckt, ausgebildet ist, wobei der erste Haltekörperteil zwei Umfassungsabschnitte aufweist, welche die Vertiefung an gegenüberliegende Seiten begrenzen, und wobei die Lichtleiteraufnahme eine Öffnung aufweist, welche an einer von dem zweiten Haltekörperteil abgewandten Seite des ersten Haltekörperteils ausgebildet ist und von den beiden Umfassungsabschnitten begrenzt ist, wobei in einer Grundform des Haltekörpers die Öffnung eine Weite aufweist, und wobei der zweite Haltekörperteil derart ausgebildet ist, dass dieser durch externe Krafteinwirkung elastisch verformbar ist und der zweite Haltekörperteil derart mit dem ersten Haltekörperteil verbunden ist, dass durch eine elastische Verformung des zweiten Haltekörperteils die Weite der Öffnung in Bezug auf die Grundform des Haltekörpers, in welcher keine äußere Kraft wirkt, derart durch Auseinanderspreizen der beiden Umfassungsabschnitte des ersten Haltekörperteils vergrößert wird, dass der Lichtleitkörper in die Lichtleiteraufnahme eingesetzt werden kann, und wobei nach Wegfall der äußeren Kraft der Haltekörper im Wesentlichen in seine Grundform zurückkehrt, sodass die Umfassungsabschnitten den in die Vertiefung eingesetzten Lichtleiter umgreifen und dieser von den Umfassungsabschnitten geklemmt wird.

Die Erfindung erlaubt eine rein mechanische Befestigung des Lichtleitkörpers ohne Kleber, wodurch Kleber und ein oder mehrere Arbeitsschritte erspart werden können, sodass eine kostengünstige Halterung des Lichtleitkörpers realisiert werden kann.

Die erfindungsgemäße Ausgestaltung erlaubt weiters eine maschinelle Montage.

Weitere vorteilhafte Ausgestaltungen der Erfindung sind in den abhängigen Ansprüchen beschrieben.

Mit Vorteil ist vorgesehen, dass die Weite der Öffnung in der Grundform geringer ist als die geringste Querschnittsausdehnung des Lichtleiters.

Die Vertiefung weist in Querschnitten beispielsweise in etwa Kreisform auf. Der Durchmesser d der Vertiefung ist - in der Grundform - gleich oder vorzugsweise geringfügig kleiner als der Durchmesser D des Lichtleiters, welcher vorzugsweise ebenfalls Kreisquerschnitt aufweist. Auf diese Weise kann eine zuverlässige und stabile Klemmung des Lichtleiters in der Vertiefung sichergestellt werden.

Vorzugsweise ist die Haltevorrichtung derart ausgebildet, dass sich eine Klemmwirkung über die gesamte Länge der Vertiefung ergibt. Es kann aber auch vorgesehen sein, dass die Klemmwirkung nur in bestimmten Abschnitten auftritt, in den anderen Abschnitten kann die Vertiefung z.B. auch größere Ausdehnung aufweisen, sodass dort keine Klemmung auftritt.

Die Vertiefung weist beispielsweise in Querschnittsebenen senkrecht auf die Kurve im Wesentlichen einen kreisförmigen Querschnitt auf und die charakteristische Größe ist in diesem Fall der Durchmesser d des kreisförmigen Querschnittes der Vertiefung.

Der beschriebene Zusammenhang bezieht sich dabei auf die Situation, dass die Lichtleiteraufnahme nicht aufgespreizt ist und kein Lichtleiter eingesetzt ist. Bei eingesetztem Lichtleiter wird die Vertiefung bzw. das erste Haltekörperteil im Bereich der Vertiefung geringfügig deformiert sein und somit etwas von der Kreisform abweichen.

Die Kurve ist beispielsweise eine Gerade, kann aber auch eine gekrümmte Form aufweisen.

Es kann vorgesehen sein, dass der zweite Haltekörperteil an einer der Lichtleiteraufnahme abgewandten Rückseite eine Materialschwächung aufweist.

Damit kann die elastische Verformbarkeit, die das Aufspreizen der Öffnung, d.h. die Vergrößerung der Weite w der Öffnung erlaubt, realisiert werden.

Dabei kann vorgesehen sein, dass die Materialschwächung in Form einer Ausnehmung auf der Rückseite des zweiten Haltekörperteils ausgebildet ist, welche sich vorzugsweise entlang der gesamten Längserstreckung des Haltekörpers erstreckt, und beispielsweise parallel zu der Kurve verläuft.

Beispielsweise kann vorgesehen sein, dass die Materialschwächung parallel zu der Kurve verläuft oder dass die Kurve und die Materialschwächung in einer "Horizontalebene" liegen.

Die Materialschwächung kann in Form einer Ausnehmung bzw. Vertiefung in dem zweiten Haltekörperteil realisiert sein.

Weiters kann vorgesehen sein, dass der zweite Haltekörperteil zumindest einen als Hebelarm wirkenden Hebelschnitt umfasst, welcher derart in Bezug auf die Rückseite angeordnet ist, dass eine äußere Kraft auf den Hebelabschnitt aufgebracht werden kann, deren Richtungsvektor nicht durch die Materialschwächung verläuft.

Die Kraft wirkt beispielsweise quer zum Hebelarm bzw. senkrecht auf den Hebelarm, und führt dazu, dass der zweite Haltekörperteil und somit die Öffnung der Vertiefung aufgespreizt wird.

Außerdem kann es von Vorteil sein, wenn der erste Haltekörperteil an einer dem zweiten Haltekörperteil abgewandten Innenseite eine Materialschwächung aufweist.

Dies gestattet eine einfachere und definierte Aufspreizung der Vertiefung.

Vorzugsweise ist dabei vorgesehen, dass die Materialschwächung in Form einer Ausnehmung an der Innenseite des ersten Haltekörperteils ausgebildet ist, welche sich vorzugsweise entlang der gesamten Längserstreckung des Haltekörpers erstreckt, und beispielsweise parallel zu der Kurve und/oder parallel zu der Materialschwächung des zweiten Haltekörperteils verläuft, wobei beispielsweise die Materialschwächung des ersten Haltekörperteils der Materialschwächung des zweiten Haltekörperteils gegenüber liegt.

Weiters kann vorgesehen sein, dass der erste Haltekörperteil in einem von dem zweiten Haltekörperteil abgewandten, vorderen Bereich, welcher die Öffnung der Lichtleiteraufnahme begrenzt, insbesondere im Bereich der Umfassungsabschnitte, derart ausgebildet ist, dass der vordere Bereich bzw. die Umfassungsabschnitte über den in der Vertiefung angeordneten Lichtleiter überstehen.

Es kann vorgesehen sein, dass der zweite Haltekörperteil einen Montageabschnitt umfasst, welcher vorzugsweise einstückig mit dem zweiten Haltekörperteil, insbesondere aus demselben Material, ausgebildet ist, wobei beispielsweise mit dem Montageabschnitt der Haltekörper in Bezug auf ein Gehäuse oder eine Abdeckscheibe befestigbar ist.

Es kann vorgesehen sein, dass der Haltekörper ein Spritzguss-Mehrkomponentenbauteil ist, welcher zumindest aus dem ersten und dem zweiten Kunststoff gebildet ist, wobei der erste Kunststoff als Weichkomponente und der zweite Kunststoff als Hartkomponente im Spritzguss miteinander verbunden sind.

Beispielsweise ist die Hartkomponente aus einem thermoplastischen Kunststoff, insbesondere aus PC/ABS (Polycarbonate/Acrylnitril Butadien Styrol), PMMA, beispielsweise mit einem Glasfaseranteil und die Weichkomponente aus einem thermoplastischen Elastomer (TPE) oder Silikon gebildet.

Weiters betrifft die Erfindung, wie bereits angesprochen, ein Montageverfahren zur Befestigung von zumindest einem Lichtleitkörper an der oben beschriebenen Haltevorrichtung, wobei das Montageverfahren folgende Schritte aufweist:
a) lösbares Aufnehmen des Lichtleitkörpers in einer ersten Montagevorrichtungskomponente einer Montagevorrichtung;
b) lösbares Aufnehmen der Haltevorrichtung in einer zweiten Montagevorrichtungskomponente;
c) Aufbringen einer Kraft an der Haltevorrichtung derart, dass die Weite der Öffnung vergrößert wird, sodass der Lichtleitkörper in die Lichtleiteraufnahme der Haltevorrichtung eingesetzt werden kann;
d) Zusammenführen der ersten Montagevorrichtungskomponente und der zweiten Montagevorrichtungskomponente, sodass der in der ersten Montagevorrichtungskomponente aufgenommene Lichtleitkörper in die Lichtleiteraufnahme eingebracht wird;
e) Lösen des Lichtleitkörpers von der ersten Montagevorrichtungskomponente;
f) Entfernen der aufgebrachten Kraft, sodass die Öffnung sich im Wesentlichen auf ihre ursprüngliche Weite der Grundform schließt, wodurch der Lichtleitkörper in der Vertiefung der Lichtleiteraufnahme eingeklemmt und gegen ein Herausfallen aus der Öffnung gehalten wird;
   wobei die Schritte e) und f) gleichzeitig oder in beliebiger Reihenfolge ausgeführt werden können,
g) Entfernen der ersten Montagevorrichtungskomponente von der zweiten Montagevorrichtungskomponente.

Dabei kann im Zuge des Montageverfahrens vorgesehen sein, dass der Lichtleitkörper entlang eines, beispielsweise gekrümmten, Verlegungspfades in der ersten Montagevorrichtungskomponente aufgenommen wird.

Vorzugsweise ist der Verlegungspfad kongruent zur Form bzw. dem Verlauf der Lichtleiteraufnahme.

Es kann vorgesehen sein, dass die erste Montagevorrichtungskomponente Vakuumdüsen aufweist, welche Vakuumdüsen dazu eingerichtet sind, den Lichtleitkörper durch Unterdruck lösbar an der ersten Montagevorrichtungskomponente zu halten.

Außerdem betrifft die Erfindung eine Montageeinrichtung zum Durchführen des Montageverfahrens, wobei die Montageeinrichtung
- eine erste Montagevorrichtungskomponente zum lösbaren Aufnehmen des Lichtleitkörpers,
- eine zweite Montagevorrichtungskomponente zum lösbaren Aufnehmen der Haltevorrichtung, sowie
- eine Vorrichtung zum reversiblen Aufbringen einer Kraft an der Haltevorrichtung derart, dass die Weite der Öffnung vergrößert wird, sodass der Lichtleitkörper in die Lichtleiteraufnahme der Haltevorrichtung eingesetzt werden kann, umfasst,
wobei die Montagevorrichtung dazu eingerichtet ist, die erste Montagevorrichtungskomponente und die zweite Montagevorrichtungskomponente derart zusammenzuführen, dass der zumindest eine, in der ersten Montagevorrichtungskomponente aufgenommene Lichtleitkörper in die Lichtleiteraufnahme der Haltevorrichtung eingebracht wird.

Es kann vorgesehen sein, dass die erste Montagevorrichtungskomponente Vakuumdüsen aufweist, welche Vakuumdüsen dazu eingerichtet sind, den zumindest einen Lichtleitkörper durch Unterdruck lösbar zu halten.

Außerdem betrifft die Erfindung noch eine Beleuchtungsvorrichtung für ein Fahrzeug, die Beleuchtungsvorrichtung aufweisend eine Abdeckscheibe sowie eine Haltevorrichtung, welche zumindest einen Lichtleiter hält, wobei die Haltevorrichtung an der Fahrzeugleuchte derart befestigt ist, dass der zumindest eine Lichtleiter an einer Seite, insbesondere einer Innenseite der Abdeckscheibe gegenüberliegend gehalten ist.

Die Haltevorrichtung kann dabei, vorzugsweise mit ihrem Montageabschnitt, z.B. an einer Abschlussscheibe der Beleuchtungsvorrichtung selbst, vorzugsweise an einer nicht transparenten Region der Abschlussscheibe, z.B. einer schwarzen Komponente im Falle einer 2K-Abschlussscheibe, angebracht sein.

Dabei kann bei der Beleuchtungsvorrichtung vorgesehen sein, dass der Lichtleiter in einem Abstand größer Null zu einer Seite, insbesondere zu der Innenseite der Abdeckscheibe, gehalten ist, wobei beispielsweise der vordere Bereich des ersten Haltekörperteils, insbesondere die über den in der Vertiefung angeordneten Lichtleiter überstehenden Umfassungsabschnitte, an der Seite der Abdeckscheibe anliegen.

Nachfolgend wird die Erfindung anhand von beispielhaften Zeichnungen näher erläutert. Hierbei zeigt
Fig. 1 eine erfindungsgemäße Haltevorrichtung in einer perspektivischen Ansicht,
Fig. 2 die Haltevorrichtung aus Figur 1 in einem Vertikalschnitt in einer Ebene Ev in ihrer Grundform,
Fig. 2a die Haltevorrichtung aus Figur 1 und Figur 2 in einem durch Ausüben einer Kraft aufgespreizten Zustand,
Fig. 3 die Haltevorrichtung aus Figur 1 mit gehaltenem länglichen Lichtleitkörper in einer perspektivischen Ansicht,
Fig. 4 die Anordnung aus Figur 3 in einem Vertikalschnitt in der Ebene Ev,
Fig. 5 in einem Vertikalschnitt die Haltevorrichtung samt Lichtleitkörper in montiertem Zustand im Bereich einer Abdeckscheibe, und
Fig. 6a - Fig. 6e eine Montagevorrichtung und die Schritte der Montage eines länglichen Lichtleitkörpers in einer erfindungsgemäßen Haltevorrichtung.

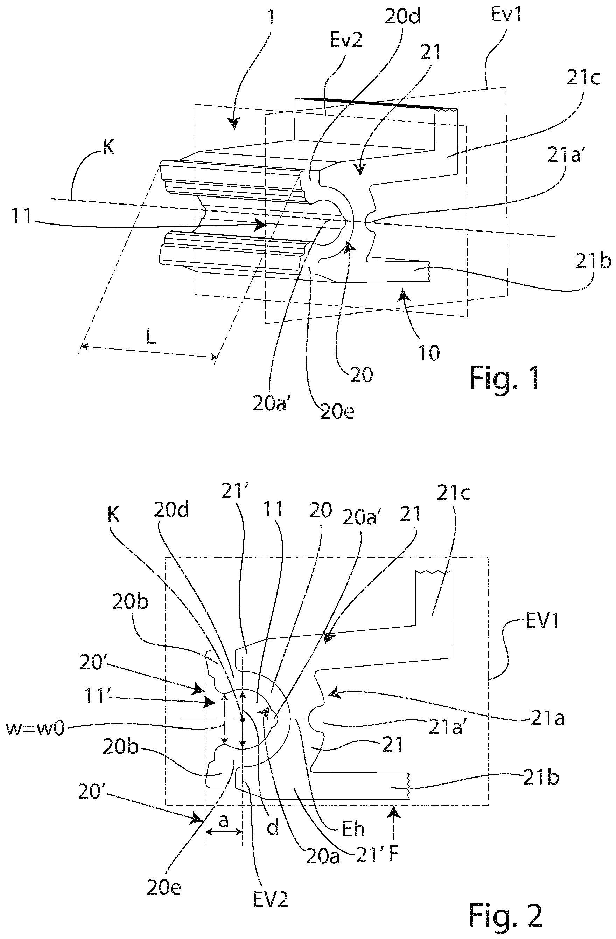

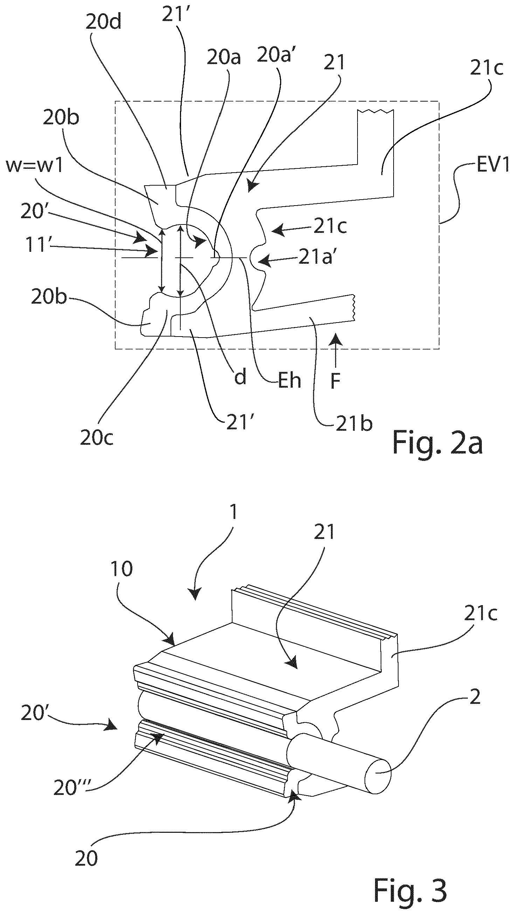

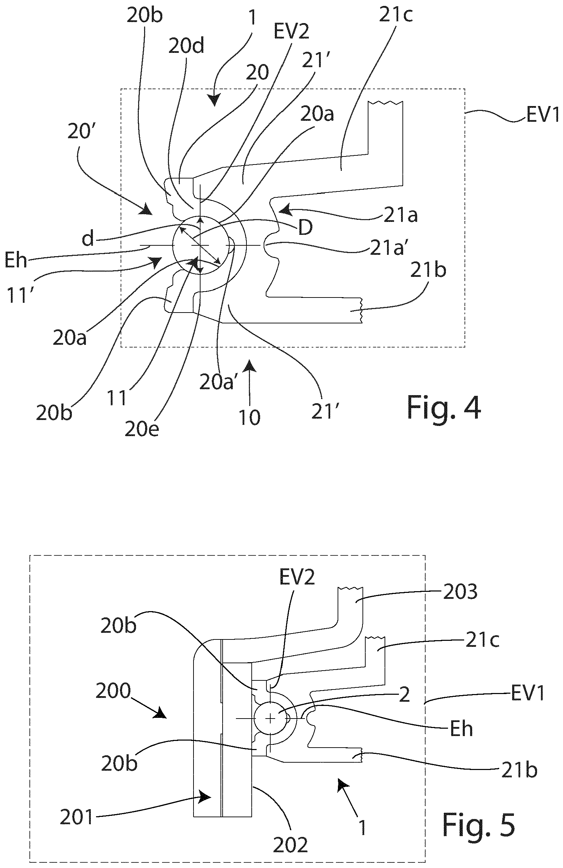

**Figur 1 und 2** zeigen Haltevorrichtung 1 zur Halterung eines, insbesondere langestreckten, Lichtleitkörpers 2, beispielsweise in Form einer, z.B. flexiblen, Lichtleitfaser. Die **Figuren 3** **und** **4** zeigen die Haltevorrichtung 1 mit von dieser gehaltenem Lichtleitkörper 2.

Die Haltevorrichtung 1 umfasst einen Haltekörper 10, wobei der Haltekörper 10 eine Lichtleiteraufnahme 11 für den Lichtleitkörper 2 aufweist. Der Haltekörper 10 wiederum umfasst zwei Haltekörperteile, einen ersten Haltekörperteil 20 und einen zweiten Haltekörperteil 21. Die beiden Haltekörperteile 20, 21 sind aus unterschiedlichen Kunststoffen gebildet, wobei der erste Haltekörperteil 20, der sogenannte innere Haltekörperteil 20, aus einem ersten Kunststoff als Weichkomponente ausgebildet ist, und der zweite Haltekörperteil 21 (der sogenannte äußere Haltekörperteil 21) aus einem zweiten Kunststoff als Hartkomponente ausgebildet ist.

Der erste Haltekörperteil 20 und der zweite Haltekörperteil 21 sind fest miteinander verbunden und bilden den Haltekörper 10.

Vorzugsweise ist dabei der Haltekörper 10 ein Spritzguss-Mehrkomponentenbauteil, welcher zumindest aus dem ersten und dem zweiten Kunststoff gebildet ist, wobei der erste Kunststoff als Weichkomponente und der zweite Kunststoff als Hartkomponente im Spritzguss miteinander verbunden sind.

Beispielsweise ist die Hartkomponente aus einem thermoplastischen Kunststoff, insbesondere aus PC/ABS (Polycarbonate/Acrylnitril Butadien Styrol), PMMA, beispielsweise mit einem Glasfaseranteil und die Weichkomponente aus einem thermoplastischen Elastomer (TPE) oder Silikon gebildet.

Der erste Haltekörperteil 20 weist die Lichtleiteraufnahme 11 zur Aufnahme des Lichtleiters 2 auf, wobei die Lichtleiteraufnahme 11 als längliche Vertiefung, die sich entlang einer Kurve K in dem Haltekörper 10 erstreckt. Beispielsweise weist der Haltekörper 10 eine Längserstreckung L auf und die Vertiefung erstreckt sich über die gesamte Längserstreckung des Haltekörpers 10.

Die Lichtleiteraufnahme 11 ist somit vorzugsweis eine längliche Vertiefung, etwa in Form einer Rille. Die Kurve K ist typischer Weise eine Gerade, kann aber auch eine gekrümmte Form aufweisen.

Der erste Haltekörperteil 20 weist zwei Umfassungsabschnitte 20d, 20e auf, welche die Vertiefung an gegenüberliegenden Seiten begrenzen.

Die Lichtleiteraufnahme 11 bzw. Vertiefung weist eine Öffnung 11' auf, welche an einer von dem zweiten Haltekörperteil 21 abgewandten Seite 20' des ersten Haltekörperteils 20 ausgebildet ist und von den beiden Umfassungsabschnitten 20d, 20e begrenzt ist.

In einer Grundform des Haltekörpers 10 weist die Öffnung 11' eine definierte Weite w = w0 auf. Die Grundform ist dabei jene Form, in der keine Kraft auf den Haltekörper 10 wirkt und kein Lichtleiter in die Vertiefung 11 eingesetzt ist.

Der zweite Haltekörperteil 21 ist derart ausgebildet, dass dieser durch externe Krafteinwirkung elastisch verformbar ist, wobei der zweite Haltekörperteil 21 derart mit dem ersten Haltekörperteil 20, insbesondere fest, verbunden ist, sodass durch eine elastische Verformung des zweiten Haltekörperteils 21 die Weite w der Öffnung 11' in Bezug auf die Grundform des Haltekörpers 10, in welcher keine äußere Kraft wirkt, derart durch Auseinanderspreizen der beiden Umfassungsabschnitte 20d, 20e des ersten Haltekörperteils 20 vergrößert wird, dass der Lichtleitkörper 2 in die Lichtleiteraufnahme 11 eingesetzt werden kann. Dazu ist der zweite Haltekörperteil 21 derart ausgebildet, dass er den ersten Haltekörperteil 20, insbesondere im Bereich der Umfassungsabschnitte 20d, 20e umgreift.

Durch eine äußere Kraft F kann, wie dies **Figur 2a** schematisch angedeutet ist, der zweite Haltekörperteil 21 aufgespreizt werden, wodurch auch der erste Haltekörperteil 20, insbesondere die beiden Umfassungsabschnitte 20d, 20e, aufgespreizt wird, da der zweite Haltekörperteil 21 und der erste Haltekörperteil 20 miteinander, insbesondere fest, verbunden sind.

Die Weite der Öffnung 11' der Vertiefung 11 kann dabei auf einen Wert w = w1 aufgespreizt werden. Dieser Wert w1 kann größer sein als die maximale Querschnittsausdehnung, z.B. den Durchmesser D des Lichtleiters 2 sein, der Wert w1 kann aber auch geringer sein, sodass der Lichtleiter 2 in die Vertiefung 11 mit einer gewissen Kraft hineingedrückt werden muss. Vorzugsweise vergrößert sich dabei auch der Durchmesser d der Vertiefung 11.

Nach Wegfall der äußeren Kraft F kehrt der Haltekörper 10 im Wesentlichen in seine Grundform zurück, sodass die Umfassungsabschnitten 20d, 20e den in die Vertiefung eingesetzten Lichtleiter 2 umgreifen und dieser von den Umfassungsabschnitten 20d, 20e geklemmt wird.

Der Begriff "im Wesentlichen in die Grundform" bedeutet, dass der Haltekörper 10 nach dem Wegfall der äußeren Kraft versucht, in seine ursprüngliche Form, die Grundform, zurückzukehren; ohne eingesetzten Lichtleitkörper 2 würde der Haltekörper 10 auch tatsächlich wieder in diese Grundform zurückkehren. Bei eingesetztem Lichtleitkörper 2, der im Querschnitt vorzugsweise geringfügig größer als die Vertiefung ist, kann der Haltekörper 10 nicht mehr vollständig in seine Grundform zurückkehren, wodurch aber eine Klemmkraft auf den Lichtleitkörper 2 ausgeübt wird, die diesen in der Vertiefung 11 klemmt.

Die Weite w wird wie in **Figur 1** gezeigt in Querschnittsebenen Ev1 senkrecht auf die Kurve K gemessen. Vorzugsweise ist die Weite w - in der Grundform - über die gesamte Länge L des Haltekörpers 10 ident. Auch im aufgespreizten Zustand ist die (dann größere) Weite über die gesamte Länge üblicherweise Weise konstant, also in allen Querschnitten entlang der Längserstreckung ident.

Der erste Haltekörperteil 20 ist vorzugsweise derart ausgebildet, dass die Weite w = w0 der Öffnung 11' in der Grundform geringer ist als die geringste Querschnittsausdehnung D des Lichtleiters 2.

Die Vertiefung 11 weist in Querschnitten beispielsweise in etwa Kreisform auf. Der Durchmesser d der Vertiefung ist - in der Grundform - gleich oder vorzugsweise geringfügig kleiner als der Durchmesser D des Lichtleiters 2, welcher beispielsweise ebenfalls Kreisquerschnitt aufweist. Auf diese Weise kann eine zuverlässige und stabile Klemmung des Lichtleiters in der Vertiefung sichergestellt werden.

Vorzugsweise ist die Haltevorrichtung 10 derart ausgebildet, dass sich eine Klemmwirkung über die gesamte Länge der Vertiefung ergibt. Es kann aber auch vorgesehen sein, dass die Klemmwirkung nur in bestimmten Abschnitten auftritt, in den anderen Abschnitten kann die Vertiefung z.B. auch größere Ausdehnung aufweisen, sodass dort keine Klemmung auftritt.

Der beschriebene Zusammenhang bezieht sich dabei auf die Situation, dass die Lichtleiteraufnahme 11 nicht aufgespreizt ist und kein Lichtleiter 2 eingesetzt ist. Bei eingesetztem Lichtleiter 2 wird die Vertiefung 11 bzw. das erste Haltekörperteil 20 im Bereich der Vertiefung geringfügig deformiert sein und somit etwas von der Kreisform abweichen.

Mit Vorteil ist vorgesehen, dass der zweite Haltekörperteil 21 an einer der Lichtleiteraufnahme 11 abgewandten Rückseite 21a eine Materialschwächung 21a' aufweist.

Damit kann die elastische Verformbarkeit, die das Aufspreizen der Öffnung 11', d.h. die Vergrößerung der Weite w der Öffnung 11' erlaubt, realisiert werden.

Wie in den Figuren gezeigt, kann vorgesehen sein, dass die Materialschwächung 21a' in Form einer Ausnehmung auf der Rückseite 21a des zweiten Haltekörperteils 21 ausgebildet ist, welche sich vorzugsweise entlang der gesamten Längserstreckung L des Haltekörpers 10 erstreckt, und beispielsweise parallel zu der Kurve K verläuft. Die Materialschwächung 21a' kann in Form einer Ausnehmung bzw. Vertiefung in dem zweiten Haltekörperteil 21 realisiert sein.

Beispielsweise kann vorgesehen sein, dass die Materialschwächung 21 a' parallel zu der Kurve K verläuft und/oder dass die Kurve K und die Materialschwächung in einer Horizontalebene Eh liegen.

Die Begriffe "Horizontalebene" Eh und "Vertikalebene" Ev1, Ev2 beziehen sich auf die konkrete, in den **Figuren 1- 5** gezeigte Ausführungsform. Bei dieser liegt der Lichtleiter in einer Horizontalebene, die - als zur Vereinfachung als eben angenommene Abdeckscheibe 201, z.B. einer Beleuchtungsvorrichtung 200 (siehe **Figur 5**) - liegt in einer Vertikalebene, welche zu der zweiten Vertikalebene Ev2 parallel ist.

Der Lichtleiter 2 bzw. die Kurve K wird als Gerade angenommen. Die erste vertikale Ebene Ev1 bzw. erste vertikale Schnittebenen durch den Lichtleiter bzw. durch die Vertiefung, zu welchen ersten vertikalen Ebenen/Schnittebenen die Ev1 Kurve K bzw. Gerade senkrecht verläuft, schneiden die zweite Vertikalebene Ev2 unter 90°. Bei den angesprochenen Ebene Eh, Ev1, Ev2 handelt es sich daher in diesem Anwendungsbeispiel tatsächlich um horizontale oder vertikale Ebenen.

In der Praxis kann, je nach Anwendungsfall und konkreter Ausgestaltung, allerdings die Lage des Lichtleiters (der natürlich auch nicht zwingend gerade sein muss) eine andere sein, d.h. der Lichtleiter und somit die Haltevorrichtung können im Raum abweichend von der in den **Figuren 1 - 5** gezeigten Ausrichtung orientiert sein. Die als Horizontalebene Eh bezeichnete Ebene bzw. die als Vertikalebenen bezeichneten Ebenen Ev1, Ev2 können dann eine andere Lage als horizontal oder vertikal einnehmen, oder es kann die Horizontalebene eine Vertikalebene sein und/oder umgekehrt.

Wie gezeigt ist mit Vorteil vorgesehen, dass der zweite Haltekörperteil 21 einen als Hebelarm wirkenden Hebelschnitt 21b umfasst, welcher derart in Bezug auf die Rückseite 21a angeordnet ist, dass eine äußere Kraft F auf den Hebelabschnitt 21b aufgebracht werden kann, deren Richtungsvektor nicht durch die Materialschwächung 21a' verläuft, und welche dazu führt, dass der zweite Haltekörperteil 21 durch die externe Kraft F um seine Materialschwächung 21a' aufgespreizt wird. Die Materialschwächung 21a' realisiert de facto eine virtuelle Verschwenkachse für Abschnitte 21' des zweiten Haltekörperteils 21, welche den ersten Haltekörperteil 20 umgreifen. Um diese virtuelle Verschwenkachse werden die beiden Abschnitte 21' "verschwenkt" und auseinandergespreizt, und somit auch der erste Haltekörperteil 20.

Weiters ist es von Vorteil, wenn wie gezeigt der erste Haltekörperteil 20 an einer dem zweiten Haltekörperteil 21 abgewandten Innenseite 20a ebenfalls eine Materialschwächung 20a' aufweist.

Dies gestattet eine einfachere und definierte Aufspreizung der Vertiefung.

Vorzugsweise ist dabei vorgesehen, dass die Materialschwächung 20a' - wiederum in Form einer Ausnehmung - an der Innenseite 20a des ersten Haltekörperteils 20 ausgebildet ist, welche sich vorzugsweise entlang der gesamten Längserstreckung L des Haltekörpers 10 erstreckt, und beispielsweise parallel zu der Kurve K und/oder parallel zu der Materialschwächung 21a' des zweiten Haltekörperteils 21 verläuft. Vorzugsweise liegt die Materialschwächung 20a' des ersten Haltekörperteils 20 der Materialschwächung 21a' des zweiten Haltekörperteils 21 gegenüber.

Weiters kann vorgesehen sein, dass der erste Haltekörperteil 20 in einem von dem zweiten Haltekörperteil 21 abgewandten, vorderen Bereich 20b, welcher die Öffnung 11' der Lichtleiteraufnahme 11 begrenzt, insbesondere im Bereich der Umfassungsabschnitte 20d, 20e, derart ausgebildet ist, dass dieser vordere Bereich 20b, der an die Umfassungsabschnitte 20d, 20e anschließt bzw. Teil dieser Umfassungsabschnitte ist, über den in der Vertiefung angeordneten Lichtleiter 2 überstehen.

Die Materialstärke des ersten Haltekörperteils 20 ist somit derart gewählt, dass zumindest abschnittsweise, vorzugsweise über die gesamte Länge L des Haltekörpers 10, der Bereich 20b jeweils zu einer lokalen vertikalen Längsmittelebene Ev2 der Kurve K bzw. die äußere Begrenzung 20b' des Bereiches 20b einen Normalabstand a aufweist, welcher größer als die eine Querschnittsabmessung, insbesondere in Durchmesser D des Lichtleiters 2.

Der erste Haltekörperteil 20 steht somit mit dem Bereich 20b über den in die Lichtleiteraufnahme 11 eingesetzten Lichtleiter 2 über.

**Figur 5** zeigt schematisch eine transparente Abdeckscheibe 201 einer Beleuchtungsvorrichtung 200, z.B. eines Kraftfahrzeugscheinwerfers, wobei die Abdeckscheibe 201 z.B. an einem Gehäuse 203 der Beleuchtungsvorrichtung befestigt ist. Mit der Haltevorrichtung 1 ist der Leitleiter 2 in der Nähe einer Innenseite 202 der Abdeckscheibe 201 positioniert, und kann möglich nahe zu der Innenseite 202 positioniert werden, ohne diese zu berühren. Der bzw. überstehende(n) Bereich(e) 20b des ersten Haltekörperteils 20 verhindern, dass der Lichtleiter 2 die Abdeckscheibe 201 bzw. deren Innenseite 202 berührt.

Insbesondere die Ausgestaltung des ersten Haltekörperteils 20 aus einer Weichkomponente erlaubt es, den Lichtleitkörper 2 so nah wie möglich bzw. gewünscht zu der Abdeckscheibe zu positionieren, da durch die Ausgestaltung aus einer Weichkomponente eine Berührung der Abdeckscheibe 201, etwa in Folge von Toleranzen, mit den Bereichen 20b unkritisch ist und auch Abrieb durch Reibung verhindert ist. Eine möglichst nahe Positionierung an der Abdeckscheibe kann erwünscht sein, um eine optimale Einsicht auf den Lichtleitkörper zu ermöglichen.

Vorzugsweise decken die überstehenden Bereich 20b auch jene Bereiche des zweiten Haltekörperteils 21, welche der Abdeckscheibe 201 am nächsten sind, ab, damit der zweite Haltekörperteil 21, der aus einer Hartkomponente besteht, nicht zur Anlage an der Abdeckscheibe kommen kann.

Zur Befestigung der Haltevorrichtung 1 in einer bestimmten Position, beispielsweise in Bezug auf eine Abdeckscheibe 201 einer Beleuchtungsvorrichtung 200, wie an Hand von **Figur 5** beschrieben, ist es von Vorteil, wenn der zweite Haltekörperteil 21 einen Montageabschnitt 21c umfasst, welcher vorzugsweise einstückig mit dem zweiten Haltekörperteil 21, insbesondere aus demselben Material, ausgebildet ist.

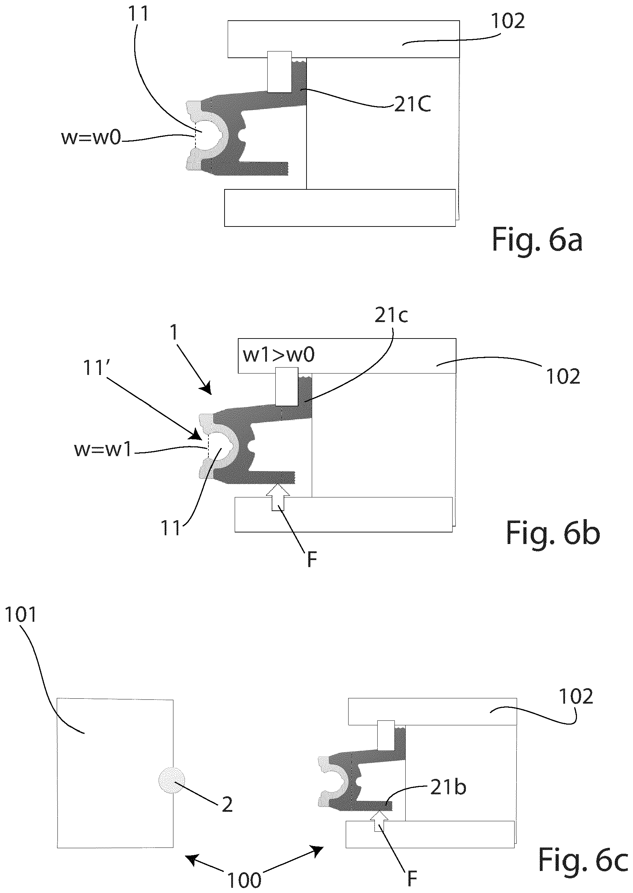

In weiterer Folge wird an Hand der **Figuren 6a - 6e** noch ein Montageverfahren zur Befestigung von einem Lichtleitkörper 2 an einer Haltevorrichtung 1 mit Hilfe einer Montagevorrichtung 100 beschrieben.

Die **Figuren 6a - 6e** zeigen eine Montageeinrichtung 100, welche eine erste Montagevorrichtungskomponente 101 zum lösbaren Aufnehmen des Lichtleitkörpers 2, eine zweite Montagevorrichtungskomponente 102 zum lösbaren Aufnehmen der Haltevorrichtung 1, sowie eine - nicht dargestellte - Vorrichtung zum reversiblen Aufbringen einer Kraft an der Haltevorrichtung 1 derart, dass die Weite w der Öffnung 11' der Lichtleiteraufnahme 11 vergrößert wird, umfasst.

Die Montagevorrichtung 100 ist dazu eingerichtet bzw. derart ausgebildet, dass die erste Montagevorrichtungskomponente 101 und die zweite Montagevorrichtungskomponente 102 zusammengeführt werden können, sodass der in der ersten Montagevorrichtungskomponente 101 aufgenommene Lichtleitkörper 2 in die Lichtleiteraufnahme 11 der Haltevorrichtung 1 eingebracht werden kann.

Zum lösbaren Halten des Lichtleitkörpers 2 an der ersten Montagevorrichtungskomponente 101 kann vorgesehen sein, dass diese Vakuumdüsen aufweist, welche Vakuumdüsen dazu eingerichtet sind, den Lichtleitkörper 2 durch Unterdruck lösbar zu halten.

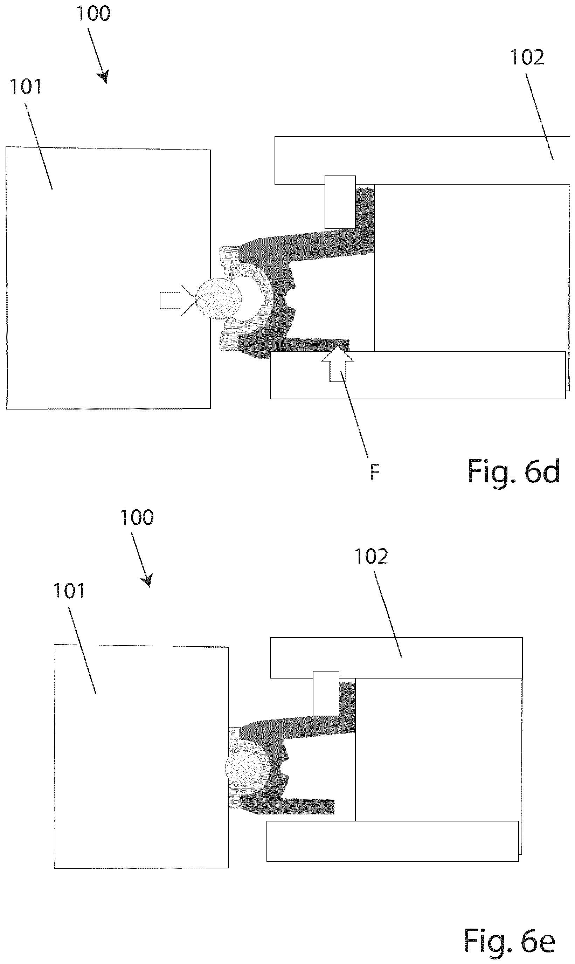

Das Montageverfahren weist dabei folgende Schritte auf:
a) lösbares Aufnehmen des Lichtleitkörpers 2 in der ersten Montagevorrichtungskomponente 101 der Montagevorrichtung 100;
b) lösbares Aufnehmen der Haltevorrichtung 1 in der zweiten Montagevorrichtungskomponente 102; die Haltevorrichtung 1 kann dabei z.B. mit ihrem Montageabschnitt 21c an der zweiten Montagevorrichtungskomponente 102 gehalten werden;
   dabei können die Schritte a) und b) gleichzeitig oder in beliebiger Reihenfolge stattfinden;
c) Aufbringen einer Kraft F an der Haltevorrichtung 1 derart, dass die Weite w der Öffnung 11' vergrößert wird (von einer Weite w = w₀ in der Grundform auf eine Weite wi), sodass der Lichtleitkörper 2 in die Lichtleiteraufnahme 11 der Haltevorrichtung 1 eingesetzt werden kann; (Figur 6b, **6c**)
d) Zusammenführen der ersten Montagevorrichtungskomponente 101 und der zweiten Montagevorrichtungskomponente 102 (**Figur 6d**), sodass der in der ersten Montagevorrichtungskomponente 101 aufgenommene Lichtleitkörper 2 in die Lichtleiteraufnahme 11 eingebracht wird; (**Figur 6e**)
e) Lösen des Lichtleitkörpers 2 von der ersten Montagevorrichtungskomponente 101; (**Figur 6e**)
f) Entfernen der aufgebrachten Kraft F (**Figur 6e**), sodass die Öffnung 11' sich im Wesentlichen auf ihre ursprüngliche Weite w = w0 der Grundform schließt, wodurch der Lichtleitkörper 2 in der Vertiefung der Lichtleiteraufnahme 11 eingeklemmt und gegen ein Herausfallen aus der Öffnung 11' gehalten wird;
   wobei die Schritte e) und f) gleichzeitig oder in beliebiger Reihenfolge ausgeführt werden können, und
g) Entfernen der ersten Montagevorrichtungskomponente 101 von der zweiten Montagevorrichtungskomponente 102.

## Patentansprüche

1. Haltevorrichtung (1) für einen, insbesondere langestreckten, Lichtleitkörpers (2), beispielsweise in Form einer, z.B. flexiblen, Lichtleitfaser, wobei die Haltevorrichtung (1) einen Haltekörper (10) umfasst, wobei der Haltekörper (10) eine Lichtleiteraufnahme (11) für den Lichtleitkörper (2) aufweist, wobei der Haltekörper aus zwei Haltekörperteilen, einem ersten Haltekörperteil (20) und einem zweiten Haltekörperteil (21), gebildet ist, wobei der erste Haltekörperteil (20), der sogenannte innere Haltekörperteil (20), aus einem ersten Kunststoff als Weichkomponente ausgebildet ist, wobei vorzugsweise die beiden Haltekörperteile (20, 21) aus unterschiedlichen Kunststoffen gebildet sind, und vorzugsweise der zweite Haltekörperteil (21) aus einem zweiten Kunststoff als Hartkomponente ausgebildet ist, und wobei der erste Haltekörperteil (20) und der zweite Haltekörperteil (21), der sogenannte äußere Haltekörperteil (21), fest miteinander verbunden sind und den Haltekörper (10) bilden, und wobei der erste Haltekörperteil (20) die Lichtleiteraufnahme (11) aufweist, wobei die Lichtleiteraufnahme (11) als längliche Vertiefung, die sich entlang einer Kurve (K), beispielsweise einer Geraden, insbesondere entlang einer definierten Länge, vorzugsweise über eine gesamte Längserstreckung (L) einer des Haltekörpers (10) erstreckt, ausgebildet ist, wobei der erste Haltekörperteil (20) zwei Umfassungsabschnitte (20d, 20e) aufweist, welche die Vertiefung an gegenüberliegende Seiten begrenzen, und wobei die Lichtleiteraufnahme (11) eine Öffnung (11') aufweist, welche an einer von dem zweiten Haltekörperteil (21) abgewandten Seite (20') des ersten Haltekörperteils (20) ausgebildet ist und von den beiden Umfassungsabschnitten (20d, 20e) begrenzt ist, wobei in einer Grundform des Haltekörpers (10) die Öffnung (11') eine Weite (w) aufweist, und wobei der zweite Haltekörperteil (21) derart ausgebildet ist, dass dieser durch externe Krafteinwirkung elastisch verformbar ist und der zweite Haltekörperteil (21) derart mit dem ersten Haltekörperteil (20) verbunden ist, dass durch eine elastische Verformung des zweiten Haltekörperteils (21) die Weite (w) der Öffnung (11') in Bezug auf die Grundform des Haltekörpers (10), in welcher keine äußere Kraft wirkt, derart durch Auseinanderspreizen der beiden Umfassungsabschnitte (20d, 20e) des ersten Haltekörperteils (20) vergrößert wird, dass der Lichtleitkörper (2) in die Lichtleiteraufnahme (11) eingesetzt werden kann, und wobei nach Wegfall der äußeren Kraft der Haltekörper (10) im Wesentlichen in seine Grundform zurückkehrt, sodass die Umfassungsabschnitten (20d, 20e) den in die Vertiefung eingesetzten Lichtleiter (2) umgreifen und dieser von den Umfassungsabschnitten (20d, 20e) geklemmt wird.

2. Haltevorrichtung nach Anspruch 1, **wobei** die Weite (w) der Öffnung (11') in der Grundform geringer ist als die geringste Querschnittsausdehnung (D) des Lichtleiters (2).

3. Haltevorrichtung nach einem der vorhergehenden Ansprüche, **wobei** der zweite Haltekörperteil (21) an einer der Lichtleiteraufnahme (11) abgewandten Rückseite (21a) eine Materialschwächung (21a') aufweist, wobei beispielsweise die Materialschwächung (21a') in Form einer Ausnehmung auf der Rückseite (21a) des zweiten Haltekörperteils (21) ausgebildet ist, welche sich vorzugsweise entlang der gesamten Längserstreckung (L) des Haltekörpers (10) erstreckt, und beispielsweise parallel zu der Kurve (K) verläuft.

4. Haltevorrichtung nach einem der vorhergehenden Ansprüche, **wobei** der zweite Haltekörperteil (21) zumindest einen als Hebelarm wirkenden Hebelschnitt (21b) umfasst, welcher derart in Bezug auf die Rückseite (21a) angeordnet ist, dass eine äußere Kraft (F) auf den Hebelabschnitt (21b) aufgebracht werden kann, deren Richtungsvektor nicht durch die Materialschwächung (21a') verläuft.

5. Haltevorrichtung nach einem der vorhergehenden Ansprüche, **wobei** der erste Haltekörperteil (20) an einer dem zweiten Haltekörperteil (21) abgewandten Innenseite (20a) eine Materialschwächung (20a') aufweist.

6. Haltevorrichtung nach Anspruch 5, **wobei** die Materialschwächung (20a') in Form einer Ausnehmung an der Innenseite (20a) des ersten Haltekörperteils (20) ausgebildet ist, welche sich vorzugsweise entlang der gesamten Längserstreckung (L) des Haltekörpers (10) erstreckt, und beispielsweise parallel zu der Kurve (K) und/oder parallel zu der Materialschwächung (21a') des zweiten Haltekörperteils (21) verläuft, wobei beispielsweise die Materialschwächung (20a') des ersten Haltekörperteils (20) der Materialschwächung (21a') des zweiten Haltekörperteils (21) gegenüber liegt.

7. Haltevorrichtung nach einem der vorhergehenden Ansprüche, **wobei** der erste Haltekörperteil (20) in einem von dem zweiten Haltekörperteil (21) abgewandten, vorderen Bereich (20b), welcher die Öffnung (11') der Lichtleiteraufnahme (11) begrenzt, insbesondere im Bereich der Umfassungsabschnitte (20d, 20e), derart ausgebildet ist, dass der vordere Bereich (20b) bzw. die Umfassungsabschnitte (20d, 20e) über den in der Vertiefung angeordneten Lichtleiter (2) überstehen.

8. Haltevorrichtung nach einem der vorhergehenden Ansprüche, **wobei** der zweite Haltekörperteil (21) einen Montageabschnitt (21c) umfasst, welcher vorzugsweise einstückig mit dem zweiten Haltekörperteil (21), insbesondere aus demselben Material, ausgebildet ist, wobei beispielsweise mit dem Montageabschnitt (21c) der Haltekörper (10) in Bezug auf ein Gehäuse oder eine Abdeckscheibe befestigbar ist.

9. Montageverfahren zur Befestigung von zumindest einem Lichtleitkörper (2) an einer Haltevorrichtung (10) nach einem der Ansprüche 1 bis 8, **wobei** das Montageverfahren folgende Schritte aufweist:
a) lösbares Aufnehmen des Lichtleitkörpers (2) in einer ersten Montagevorrichtungskomponente (101) einer Montagevorrichtung (100);
b) lösbares Aufnehmen der Haltevorrichtung (1) in einer zweiten Montagevorrichtungskomponente (102);
c) Aufbringen einer Kraft an der Haltevorrichtung (1) derart, dass die Weite (w) der Öffnung (11') vergrößert wird, sodass der Lichtleitkörper (2) in die Lichtleiteraufnahme (11) der Haltevorrichtung (1) eingesetzt werden kann;
d) Zusammenführen der ersten Montagevorrichtungskomponente (101) und der zweiten Montagevorrichtungskomponente (102), sodass der in der ersten Montagevorrichtungskomponente (101) aufgenommene Lichtleitkörper (2) in die Lichtleiteraufnahme (11) eingebracht wird;
e) Lösen des Lichtleitkörpers (2) von der ersten Montagevorrichtungskomponente (101);
f) Entfernen der aufgebrachten Kraft, sodass die Öffnung (11') sich im Wesentlichen auf ihre ursprüngliche Weite (w) der Grundform schließt, wodurch der Lichtleitkörper (2) in der Vertiefung der Lichtleiteraufnahme (11) eingeklemmt und gegen ein Herausfallen aus der Öffnung (11') gehalten wird;
wobei die Schritte e) und f) gleichzeitig oder in beliebiger Reihenfolge ausgeführt werden können,
g) Entfernen der ersten Montagevorrichtungskomponente (101) von der zweiten Montagevorrichtungskomponente (102).

10. Montageverfahren nach Anspruch 9, **wobei** der Lichtleitkörper (2) entlang eines, beispielsweise gekrümmten, Verlegungspfades in der ersten Montagevorrichtungskomponente (101) aufgenommen wird.

11. Montageeinrichtung (100) zum Durchführen eines Verfahrens nach Anspruch 9 oder 10 zur Befestigung zumindest eines Lichtleitkörpers (2) an einer Haltevorrichtung (1) nach einem der Ansprüche 1 bis 8, **wobei**
die Montageeinrichtung (100)
- eine erste Montagevorrichtungskomponente (101) zum lösbaren Aufnehmen des Lichtleitkörpers (2),
- eine zweite Montagevorrichtungskomponente (102) zum lösbaren Aufnehmen der Haltevorrichtung (1), sowie
- eine Vorrichtung zum reversiblen Aufbringen einer Kraft an der Haltevorrichtung (1) derart, dass die Weite (w) der Öffnung (11') vergrößert wird, sodass der Lichtleitkörper (2) in die Lichtleiteraufnahme (11) der Haltevorrichtung (1) eingesetzt werden kann,
umfasst, wobei die Montagevorrichtung (100) dazu eingerichtet ist, die erste Montagevorrichtungskomponente (101) und die zweite Montagevorrichtungskomponente (102) derart zusammenzuführen, dass der zumindest eine, in der ersten Montagevorrichtungskomponente (101) aufgenommene Lichtleitkörper (2) in die Lichtleiteraufnahme (11) der Haltevorrichtung (1) eingebracht wird.

12. Montageeinrichtung nach Anspruch 11, **wobei** die erste Montagevorrichtungskomponente (101) Vakuumdüsen aufweist, welche Vakuumdüsen dazu eingerichtet sind, den zumindest einen Lichtleitkörper (2) durch Unterdruck lösbar zu halten.

13. Beleuchtungsvorrichtung (200) für ein Fahrzeug, die Beleuchtungsvorrichtung (200) aufweisend eine Abdeckscheibe (201) sowie eine Haltevorrichtung (1) nach einem der Ansprüche 1 bis 8, welche zumindest einen Lichtleiter (2) hält, **wobei** die Haltevorrichtung (1) an der Fahrzeugleuchte (200) derart befestigt ist, dass der zumindest eine Lichtleiter (2) an einer Seite, insbesondere einer Innenseite (202) der Abdeckscheibe gegenüberliegend gehalten ist.

14. Beleuchtungsvorrichtung (200) nach Anspruch 13, **wobei** der Lichtleiter (2) in einem Abstand größer Null zu der Seite, insbesondere der Innenseite (202) der Abdeckscheibe (201), gehalten ist, wobei beispielsweise der vordere Bereich (20b) des ersten Haltekörperteils (20), insbesondere die über den in der Vertiefung angeordneten Lichtleiter (2) überstehenden Umfassungsabschnitte (20d, 20e), an der Seite der Abdeckscheibe (201) anliegen.

15. Fahrzeug, insbesondere Kraftfahrzeug, **wobei** das Fahrzeug zumindest eine Beleuchtungsvorrichtung (200) nach Anspruch 14 aufweist.
